# EUROPÄISCHE PATENTSCHRIFT

(11) **EP 4 084 639 B1**
(45) Veröffentlichungstag und Bekanntmachung des Hinweises auf die Patenterteilung: **16.08.2023**
(21) Anmeldenummer: 22700518.8
(22) Anmeldetag: 12.01.2022
(51) Int. Cl.: A24F 40/46, A24F 40/51, A24F 40/57

(54) **ERFASSUNG DER TEMPERATUR EINES HEIZELEMENTS EINER E-ZIGARETTE**
MEASURING THE TEMPERATURE OF A HEATING ELEMENT OF AN ELECTRONIC CIGARETTE
DÉTECTION DE LA TEMPÉRATURE D'UN ÉLÉMENT CHAUFFANT D'UNE CIGARETTE ÉLECTRONIQUE

(30) Priorität: 12.01.2021 DE 102021100441
(43) Veröffentlichungstag der Anmeldung: 09.11.2022
(73) Patentinhaber: SmokerStore GmbH, 58332 Schwelm (DE)
(72) Erfinder: GURTNER, Clas, 58566 Kierspe (DE); SIMON, Oliver, 52146 Würselen (DE); DOBRAS, Jaroslaw, 58135 Hagen (DE); KOSCHOLLEK, Michael, 58256 Ennepetal (DE)
(74) Vertreter: Wimmer, Stephan
(86) Internationale Anmeldenummer: PCT/IB2022/050213
(87) Internationale Veröffentlichungsnummer: WO 2022/153190

(56) Entgegenhaltungen:
- EP-A1- 3 267 765
- WO-A1-2020/074611
- CA-A1- 3 104 827
- US-A1- 2018 077 967
- US-A1- 2020 367 570

## Beschreibung

Die vorliegende Erfindung ist auf die Erfassung der Temperatur eines Heizelements einer E-Zigarette oder eines anderen elektrischen Rauch- oder Dampfsystems zum elektrischen Verdampfen eines Liquids und Erzeugen eines inhalierbaren Aerosols und auf eine E-Zigarette oder ein anderes elektrisches Rauch- oder Dampfsystem bezogen.

Beim Rauchen von Zigaretten, Zigarren und Tabakspfeifen wird Tabak schwelend bis glimmend verbrannt. Dabei werden nicht nur Nikotin und erwünschte Aromen freigesetzt oder erzeugt und eingeatmet, sondern auch zahlreiche andere Stoffe. Viele beim Rauchen erzeugte und eingeatmete Stoffe sind reizend, bluttoxisch, neurotoxisch und/oder karzinogen. Deshalb werden seit der zweiten Hälfte des 20. Jahrhunderts Ideen entwickelt, um in einem einzuatmenden Luftstrom Nikotin und Aromen freizusetzen, ohne dabei Tabak zu verbrennen (vgl. US 3,200,819).

Bei aktuellen Bauformen von E-Zigaretten (auch als elektrische Zigaretten oder elektronische Zigaretten bezeichnet; engl.: electronic cigarette) wird eine als Liquid bezeichnete Flüssigkeit, die Aromen und Nikotin enthalten kann, durch elektrische Heizung und/oder hochfrequente Schallwellen verdampft oder zerstäubt. Weil eine E-Zigarette keinen klassischen Verbrennungsrauch, sondern Dampf erzeugt, wird die Verwendung einer E-Zigarette oft nicht als Rauchen, sondern als Dampfen bezeichnet. Deshalb werden im Folgenden die Begriffe "elektrisches Rauchsystem" und "elektrisches Dampfsystem" als gleichbedeutend verstanden.

In WO 2020/212009 A1 ist ein Heizelement für ein System zur Bereitstellung eines inhalierbaren Aerosols, insbesondere für eine E-Zigarette, beschrieben. Ein Chip kann eine Heizstruktur und einen Temperatursensor auf einem Trägersubstrat umfassen. Ein Heizelement weist einen Temperatursensor auf einem Grundkörper neben einer Heizstruktur auf. Der Temperatursensor kann mit einer Auswerteelektronik verbunden sein und die momentane Temperatur der Heizstruktur an die Auswerteelektronik übermitteln.

In EP 3 626 093 A1, auch veröffentlicht als WO 2020/061365 A1, ist ein Heizelement für ein System zur Bereitstellung eines inhalierbaren Aerosols, insbesondere für eine E-Zigarette, beschrieben. Das Heizelement 1 umfasst eine Heizstruktur 3 auf einem Grundkörper 5 aus einem elektrisch isolierenden Material und eine Abdeckschicht 7, die die Heizstruktur 3 auf dem Grundkörper 5 fixiert. Die Heizstruktur 3 ist ein Heizwiderstand aus einem Metalldraht. Die Abdeckschicht ist elektrisch isolierend. Das Heizelement 1 weist einen Temperatursensor 13 auf, der auf der Heizstruktur 3 angeordnet ist und die momentane Temperatur der Heizstruktur 3 an die Auswerteelektronik übermittelt.

In DE 10 2017 111 119 A1 ist eine Verdampfereinheit für einen Inhalator, insbesondere eine E-Zigarette, beschrieben. Eine Temperatursteuerung oder -regelung eines Heizelements 65 erfolgt entweder auf der Grundlage einer Messung des elektrischen Widerstands des Heizelements oder mittels eines Temperatursensors.

In WO 2020/216198 A1 ist eine elektronische Zigarette mit einem Heizelement 11 und einem Temperatursensor 12 beschrieben, wobei der Temperatursensor 12 das Heizelement 11 teilweise umgibt.

In WO 2020/182772 A1 ist eine Aerosol erzeugende Vorrichtung beschrieben. An (induktiv erwärmten) Heizelementen 114, 124 ist je ein Temperatursensor, insbesondere ein Thermoelement angeordnet. Die von den Temperatursensoren gemessenen Temperaturdaten werden an eine Steuerung übertragen, die eine PID-Steuerung enthalten kann und die Leistungszufuhr steuert.

In EP 2 654 471 B1 (auch veröffentlicht als WO 2012/085205 A1) ist ein Aerosol erzeugendes System beschrieben. Die Temperatur einer Heizeinrichtung wird durch einen Temperatursensor erfasst, der mit einer Steuerschaltung gekoppelt ist, die ein Abschaltsignal erzeugt, wenn die erfasste Temperatur einen Temperatur-Schwellenwert überschreitet.

In WO 2020/069030 A1 ist eine Vorrichtung zur Dünnfilm-Kapillar-Verdampfung beschrieben. Ein Thermoelement 912 auf einer Oberfläche einer Heizeinrichtung (nämlich CFV = capillary force vaporizer = Kapillarkraft-Verdampfer) wird zur Temperaturerfassung und Steuerung der Heizeinrichtung 710 verwendet.

In DE 10 2017 222 528 B3 ist eine Heizeinheit für eine System zur Bereitstellung eines inhalierbaren Aerosols beschrieben. Auf einem Substrat 9 sind ein Heizelement 11 und ein Temperatursensorelement 1 angeordnet.

In WO 2016/115689 A1 ist eine Schaltung zur Änderung des äquivalenten Widerstands eines Heizdrahts eines Verdampfers beschrieben. Eine Temperaturerfassungsschaltung erfasst die Temperatur eines Heizdrahts. Die Temperaturerfassungsschaltung erfasst die Temperatur mittels eines Thermistors 81, 82 oder eines Thermoelements 83.

In JP 2000041654 A ist ein elektrisches Heizsteuerungssystem für eine Geschmack produzierende Vorrichtung beschrieben. Ein Temperatursensor ist auf einer Oberfläche einer Heizeinrichtung angebracht, die durch den Temperatursensor erfasste Temperatur wird von einer Heizungssteuerungsvorrichtung verwendet.

In DE 10 2016 002 665 A1 ist ein elektronisches Zigarettenprodukt beschrieben. Zur Messung und/oder Regelung der Temperatur einer Heizplatte ist eine Sensorik vorgesehen, die einen Temperaturfühler oder eine widerstands-veränderliche leitende Beschichtung der Heizplatte umfassen kann.

Eine Messung des elektrischen Widerstands und damit der Temperatur dieser widerstands-veränderlichen leitenden Beschichtung der selbst elektrisch leitfähigen Heizplatte ist nur möglich, wenn die widerstands-veränderliche leitende Beschichtung von der Heizplatte durch eine elektrisch isolierende Schicht getrennt ist.

In US 2020/0163378 A1 ist eine tragbare und steuerbare Vorrichtung zum Erzeugen eines inhalierbaren Dampfes beschrieben. Ein Thermoelement kann in einem Luftstrom stromabwärts einer Heizeinrichtung angeordnet sein, um die Lufttemperatur zu erfassen oder zu regeln.

In US 2020/0345070 A1 sind ein Tabakverdampfer und ein Heizungssteuerverfahren beschrieben. Zur Erfassung der Temperatur einer Kammer, die ein Heizelement enthält, ist ein Temperatursensor an eine Außenwand eines Körpers der Kammer geschweißt.

In US 2019/0124985 A1 ist eine Verdampfer mit einem Heizelement mit mehreren Heizbereichen und einer entsprechenden Zahl von Temperatursensoren, die mit dem Heizbereichen thermisch leitfähig verbunden sind, beschrieben.

In WO 2018/202730 A1 ist ein elektrischer Verbinder eines elektrisch betriebenen Aerosol-erzeugenden Systems beschrieben. Mehrere Anordnungen von Kontakten des elektrischen Verbinders sind gezeigt.

In EP 3 267 765 A1 ist eine Heizungseinrichtung mit einem Heizbauteil aus einem hohlen Metallrohr beschrieben. In dem Heizbauteil ist ein Temperatursensor angeordnet, um die Temperatur des Heizbauteils zu messen. Ein isolierendes Material ist zwischen den Temperatursensor und das Heizbauteil gefüllt, so dass der Temperatursensor von dem Heizbauteil elektrisch isoliert ist. Der Temperatursensor umfasst zwei Thermoelement-Drähte, die an einem Ende miteinander verbunden sind, und die nebeneinander in dem Heizbauteil angeordnet sind. Ein Ende eines der Thermeoelement-Drahts ist mit einem leitfähigen Bauteil an einem der Enden des Heizbauteils verbunden, ein Ende des anderen Thermoelement-Drahts ist mit einem Signalleiter verbunden.

In US 2020/0367570 A1 ist eine Aerosol erzeugende Vorrichtung mit einem Heizelement und mehreren Temperatursensoren beschrieben. Ein Temperatursensor ist an einer Heizoberfläche des Heizelements angeordnet, um die Temperatur an der Heiz-oberfläche oder die Temperatur des Heizelements zu messen. Die Temperatursensoren können On-Chip-Temperatursensoren sein.

In WO 2020/074611 A1 ist eine Aerosol erzeugende Vorrichtung beschrieben. Die Aerosol erzeugende Vorrichtung umfasst eine Heizeinrichtung und einen Temperatursensor zum Erfassen der Temperatur der Heizeinrichtung. Der Temperatursensor kann ein Thermoelement sein.

Eine Aufgabe der vorliegenden Erfindung besteht darin, eine bessere Erfassung der Temperatur eines Heizelements einer E-Zigarette oder einer anderen Vorrichtung zum Verdampfen eines Liquids zu schaffen.

Diese Aufgabe wird durch die Gegenstände der unabhängigen Ansprüche gelöst.

Weiterbildungen sind in den abhängigen Ansprüchen angegeben.

Ein Verdampfer zum Verdampfen eines Liquids umfasst ein Heizelement zur Aufnahme elektrischer Leistung und zur Abgabe thermischer Leistung an ein zu verdampfendes Liquid und einen Temperatursensor zum Erfassen der Temperatur des Heizelements, wobei der Temperatursensor und das Heizelement unmittelbar mechanisch verbunden und thermisch gekoppelt sind.

Der Verdampfer ist als Teil einer E-Zigarette oder für eine E-Zigarette oder für ein anderes elektrisches Rauch- oder Dampfsystems vorgesehen und ausgebildet. Der Verdampfer kann als Verdampfer-Modul ausgebildet sein, das mit einem Leistungsquellen-Modul zusammen bereits eine vollständige und betriebsbereite E-Zigarette oder ein vollständiges und betriebsbereites anderes elektrisches Rauch- oder Dampfsystem bilden kann. Alternativ ist der Verdampfer dafür vorgesehen und ausgebildet, mit einem oder mehreren anderen Bauteilen - beispielsweise einem Gehäuse - zusammen ein Verdampfer-Modul im vorgehend beschriebenen Sinne zu bilden.

Der Temperatursensor und das Heizelement sind insbesondere ohne ein elektrisch isolierendes Bauteil oder eine elektrisch isolierende Materialschicht zwischen ihnen unmittelbar verbunden.

Die unmittelbare mechanische Verbindung und thermische Kopplung von Temperatursensor und Heizelement kann eine besonders kostengünstige Herstellung ermöglichen. Ferner kann die unmittelbare mechanische Verbindung und thermische Kopplung die thermische Trägheit reduzieren und damit eine besonders schnelle und genaue Regelung einer Temperatur des Heizelements ermöglichen.

Bei einem Verdampfer, wie er hier beschrieben ist, sind der Temperatursensor und das Heizelement miteinander elektrisch leitfähig verbunden.

Einige Fügeverfahren, die mit einer elektrisch leitfähigen Verbindung einher gehen, sind besonders kostengünstig und/oder schaffen eine besonders massearme oder thermisch besonders leitfähige Verbindung, die eine besonders genaue und schnelle Regelung der Temperatur des Heizelements ermöglicht.

Bei einem Verdampfer, wie er hier beschrieben ist, umfasst der Temperatursensor die Messstelle eines Thermoelements.

Die Messstelle eines Thermoelement besteht aus einer elektrisch leitfähigen, in der Regel unmittelbaren, nämlich durch Schweißen gebildeten Verbindung zwischen zwei Drähten oder anderen Bauteilen aus unterschiedlichen Metallen. Aufgrund des Seebeck-Effekts entsteht an dem Übergang zwischen beiden Materialien eine Spannung, die von der Temperatur der Messstelle abhängt. Im geschlossenen Stromkreis liegen notwendigerweise mindestens zwei derartige Übergänge zwischen unterschiedlichen Materialien vor. Messbar ist die Differenz der Thermospannungen, die von den Temperaturen der Übergänge abhängt. Wenn alle Übergänge die selbe Temperatur aufweisen, verschwindet die Differenz der Thermospannungen.

In der Regel sind an der Messstelle, deren Temperatur gemessen werden soll, zwei Drähte aus unterschiedlichen Metallen, beispielsweise Nickel-Chrom und Nickel oder Eisen und Kupfer-Nickel oder Platin-Rhodium und Platin, verschweißt. An einem anderen Ort, der als Vergleichsstelle bezeichnet wird, sind beide Drähte mit Leitungen aus Kupfer verbunden, die ihrerseits die Vergleichsstelle mit einem Messgerät zum Erfassen der Spannung verbinden. Die Temperatur der Vergleichsstelle wird mittels eines weiteren Thermometers, beispielsweise eines temperaturabhängigen Widerstands, gemessen.

Thermoelemente können sehr kostengünstig und nahezu beliebig klein, mit entsprechend geringer Masse und entsprechend geringer thermischer Trägheit herstellbar sein. Thermoelemente können mechanisch und chemisch robust sein und einfach befestigbar sein.

Bei einem Verdampfer, wie er hier beschrieben ist, sind der Temperatursensor und das Heizelement insbesondere durch eine Schweißverbindung miteinander unmittelbar mechanisch verbunden und thermisch gekoppelt.

Die Schweißverbindung ist insbesondere eine Punktschweißung. Eine Schweißverbindung kann schnell, einfach und kostengünstig herstellbar, mechanisch und chemisch robust sein.

Bei einem Verdampfer, wie er hier beschrieben ist, ist der Temperatursensor insbesondere an dem Ort des Heizelements angeordnet, der bei vorgesehener Verwendung die höchste Temperatur erreicht.

Bei der vorgesehenen Verwendung wird das Heizelement von einem vorgesehenen Strom oder von einem vorgesehenen maximalen Strom durchflossen. Bei der vorgesehenen Verwendung ist das Heizelement insbesondere gleichförmig mit beispielsweise durch einen Docht zugeführtes und zu verdampfendem Fluid in thermischem Kontakt und wird durch das verdampfende Fluid gekühlt. Der Ort, an dem bei der vorgesehenen Verwendung die höchste Temperatur erreicht wird, ist von der Geometrie des Heizelements abhängig und kann im Zweifel empirisch oder durch numerische Simulation bestimmt werden.

Bei einem Verdampfer, wie er hier beschrieben ist, ist der Temperatursensor insbesondere in der geometrischen Mitte des Heizelements angeordnet.

Im Fall eines linienförmigen Heizelements, beispielsweise eines geraden oder nur schwach gekrümmten Drahts, ist der Temperatursensor insbesondere im mittleren Drittel oder im mittleren Fünftel oder im mittleren Zehntel der Länge des linienförmigen Heizelements angeordnet. Im Fall eines helikalen Heizelements, beispielsweise einer Drahtwendel, ist der Temperatursensor insbesondere an einer Windung im mittleren Drittel oder im mittleren Fünftel oder im mittleren Zehntel angeordnet. Im Fall eines flächigen Heizelements, beispielsweise einer Netzes oder eines Gitters, ist der Temperatursensor insbesondere am Flächenmittelpunkt des flächigen Heizelements angeordnet. Im Fall eines rechteckigen flächigen Heizelements, beispielsweise einer Netzes oder eines Gitters, ist der Temperatursensor insbesondere sowohl hinsichtlich der Länge als auch hinsichtlich der Breite des flächigen Heizelements im mittleren Drittel oder im mittleren Fünftel oder im mittleren Zehntel angeordnet.

Bei einem Verdampfer, wie er hier beschrieben ist, ist das Heizelement insbesondere als Netz oder Gitter ausgebildet, wobei das Heizelement einen vollflächigen Bereich ohne Löcher, Maschen oder andere Ausnehmungen aufweist, und wobei der Temperatursensor mit dem vollflächigen Bereich des Heizelements unmittelbar mechanisch verbunden und thermisch gekoppelt ist.

Ein vollflächige Bereich ohne Löcher, Maschen oder andere Ausnehmungen kann die Befestigung des Temperatursensors deutlich vereinfachen, den Ausschuss bei der Produktion verringern und die Zuverlässigkeit der mechanischen Verbindung deutlich verbessern.

Bei einem Verdampfer, wie er hier beschrieben ist, sind insbesondere mehrere Temperatursensoren untereinander räumlich beabstandet und jeweils mit dem Heizelement unmittelbar mechanisch verbunden und thermisch gekoppelt.

Die Verwendung mehrerer Temperatursensoren kann die Überwachung und Regelung der Temperatur des Heizelements deutlich verbessern und sicherer machen. Insbesondere kann ein Überhitzen des Heizelements an einem Ort, an den beispielsweise kein oder zu wenig Fluid gelangt, und an dem deshalb die Kühlung durch das verdampfende Fluid reduziert ist oder entfällt, verhindert werden.

Ein Leistungsquellen-Modul umfasst eine Schnittstelle zur mechanischen und elektrischen Verbindung des Leistungsquellen-Moduls mit einer korrespondierenden Schnittstelle an einem Verdampfer, eine Temperaturmessschaltung zum Erfassen eines Temperatursignals eines mit einem Heizelement des Verdampfers unmittelbar thermisch gekoppelten Temperatursensors und eine mit der Temperaturmessschaltung gekoppelte Leistungsquelle zum Bereitstellen elektrischer Leistung für das Heizelement des Verdampfers abhängig von dem durch die Temperaturmessschaltung erfassten Temperatursignal.

Das Leistungsquellen-Modul ist als Teil einer E-Zigarette oder für eine E-Zigarette oder für ein anderes elektrisches Rauch- oder Dampfsystems vorgesehen und ausgebildet. Das Leistungsquellen-Modul kann ausgebildet sein, um mit einem Verdampfer zusammen bereits eine vollständige und betriebsbereite E-Zigarette oder ein vollständiges und betriebsbereites anderes elektrisches Rauch- oder Dampfsystem zu bilden. Das Leistungsquellen-Modul ist insbesondere als separat handelbares Modul ("Akkuträger") vorgesehen und ausgebildet, das von einem Endverbraucher mit einem Verdampfer oder Verdampfer-Modul ohne Weiteres und insbesondere ohne Verwendung von Werkzeug zu einer vollständigen gebrauchsfertigen E-Zigarette oder zu einem vollständigen gebrauchsfertigen anderen elektrischen Rauch- oder Dampfsystem kombiniert zu werden.

Das Leistungsquellen-Modul ist insbesondere zur Kombination mit einem Verdampfer, wie er hier beschrieben ist, vorgesehen und ausgebildet. Dazu ist insbesondere die Schnittstelle des Leistungsquellen-Moduls zur mechanischen und elektrischen Verbindung des Leistungsquellen-Moduls mit einer korrespondierenden Schnittstelle an einem Verdampfer, wie er hier beschrieben ist, vorgesehen und ausgebildet.

Bei einem Leistungsquellen-Modul, wie es hier beschrieben ist, umfasst die Schnittstelle elektrische Leistungskontakte zum Übertragen elektrischer Leistung über korrespondierende elektrische Leistungskontakte des Verdampfers zu dem Heizelement des Verdampfers und elektrische Signalkontakte zum Empfangen eines Temperatursignals von dem Temperatursensor des Verdampfers über korrespondierende Signalkontakte des Verdampfers.

Sowohl die Leistungskontakte als auch die Signalkontakte sind insbesondere jeweils paarweise ausgeführt. Die Leistungskontakte sind insbesondere wie bei einer herkömmlichen E-Zigarette angeordnet, also beispielsweise konzentrisch, wobei der äußere Kontakt durch das Gehäuse, genauer einen näherungsweise kreisförmigen Rand des Gehäuses oder ein Schraubgewinde an diesem Rand gebildet wird. Die Signalkontakte sind insbesondere an Orten angeordnet, die eine Verwechslung oder eine unbeabsichtigte Kontaktierung mit Leistungskontakten eines Verdampfers ausschließen.

Bei einem Leistungsquellen-Modul, wie es hier beschrieben ist, ist die Temperaturmessschaltung zur Erfassung einer Differenz einer Thermospannung an einer Messstelle eines Thermoelements und einer Thermospannung an einer Vergleichsstelle ausgebildet, wobei die Vergleichsstelle durch die Signalkontakte gebildet wird.

Ein Leistungsquellen-Modul, wie es hier beschrieben ist, umfasst insbesondere ferner einen weiteren Temperatursensor zur Messung der Temperatur der Vergleichsstelle, wobei der weitere Temperatursensor zwischen den Signalkontakten des Leistungsquellen-Moduls angeordnet ist.

Der Temperatursensor ist zwischen den Signalkontakten des Leistungsquellen-Moduls angeordnet, wenn keiner der Abstände zwischen dem Temperatursensor und jedem der Signalkontakte größer ist als der Abstand zwischen den Signalkontakten.

Die Anordnung des Temperatursensors zwischen den Signalkontakten des Leistungsquellen-Moduls, also in deren unmittelbarer räumlicher Nähe, ermöglicht eine besonders zuverlässige Erfassung der Temperatur der Signalkontakte, die die Vergleichsstelle bilden.

Bei einem Leistungsquellen-Modul, wie es hier beschrieben ist, umfasst die Temperaturmessschaltung insbesondere einen hochohmigen und linearen oder nicht-linearen Differenzspannungsverstärker.

Bei einem Leistungsquellen-Modul, wie es hier beschrieben ist, ist die Temperaturmessschaltung insbesondere zum Erfassen eines Temperatursignals eines mit dem Heizelement des Verdampfers elektrisch leitfähig verbundenen Temperatursensors ausgebildet.

Das Erfassen eines Temperatursignals eines mit dem stromdurchflossenen Heizelement elektrisch leitfähig verbundenen Temperatursensors setzt insbesondere eine elektrische Isolierung oder eine hochohmige Trennung der Temperaturmessschaltung von der Leistungsquelle und den Anschlüssen des Heizelements voraus.

Bei einem Leistungsquellen-Modul, wie es hier beschrieben ist, betragen die elektrischen Widerstandswerte zwischen jedem der Signalkontakte des Leistungsquellen-Moduls und jedem der Leistungskontakte des Leistungsquellen-Moduls insbesondere mindestens 10 kΩ oder mindestens 100 kΩ.

Bei einem Leistungsquellen-Modul, wie es hier beschrieben ist, umfasst die Temperaturmessschaltung insbesondere eine eigene Leistungsquelle, die von den Leistungskontakten des Leistungsquellen-Moduls galvanisch isoliert ist.

Die eigene Leistungsquelle der Temperaturmessschaltung umfasst insbesondere eine Batterie oder einen Akkumulator oder einen Kondensator.

Bei einem Leistungsquellen-Modul, wie es hier beschrieben ist, umfasst die Temperaturmessschaltung insbesondere einen Analog-Digital-Konverter und eine ganzzahlige Verarbeitung eines durch den Analog-Digital-Konverter erzeugten digitalen Ausgangssignals.

Eine Verarbeitung von Ganzzahlen (Integer) ist schneller und erfordert damit weniger Zeit und weniger Energie als eine Verarbeitung von Fließkommazahlen.

Bei einem Leistungsquellen-Modul, wie es hier beschrieben ist, sind die Temperaturmessschaltung und eine mit der Temperaturmessschaltung gekoppelte Leistungssteuerung insbesondere analog aufgebaut.

Eine analoge, also auf eine Digitalisierung verzichtende Signalverarbeitung kann besonders schnell sein und damit eine besonders genaue Regelung der Temperatur des Heizelements ermöglichen.

Bei einem Leistungsquellen-Modul, wie es hier beschrieben ist, weist die Schnittstelle des Leistungsquellen-Moduls insbesondere eine Dekodiereinrichtung zum Dekodieren einer durch die Schnittstelle des Verdampfer-Moduls kodierten Solltemperatur auf.

Die Solltemperatur kann beispielsweise mechanisch, optisch oder elektrisch kodiert sein. Eine mechanische Struktur an dem Verdampfer, die die Solltemperatur kodiert, kann von der Dekodiereinrichtung des Leistungsquellen-Moduls mechanisch oder optisch abgetastet werden. Eine optische Kodierung an dem Verdampfer, beispielsweise in Form eines QR-Codes oder eines Barcodes, kann von der Dekodiereinrichtung des Leistungsquellen-Moduls optisch abgetastet werden. Beispielsweise kann eine Photodiode an dem Leistungsquellen-Modul während eines Zusammenschraubens des Leistungsquellen-Moduls mit dem Verdampfer einen dabei passierenden Strichcode an einem Umfang des Verdampfers abtasten.

Bei einem Leistungsquellen-Modul, wie es hier beschrieben ist, sind die Signalkontakte des Leistungsquellen-Moduls insbesondere korrespondierend zu vorbestimmten möglichen Positionen der Signalkontakte des Verdampfers angeordnet, wobei die Solltemperatur durch die Anordnung der Signalkontakte an der Schnittstelle des Verdampfers kodiert ist, und wobei die Dekodiereinrichtung zur Dekodierung der Solltemperatur anhand der durch die Signalkontakte des Verdampfers kontaktierten Signalkontakte des Leistungsquellen-Moduls ausgebildet ist.

Beispielsweise bei einer vorbestimmten Position des ersten Signalkontakts und drei alternativen vorbestimmten Positionen des zweiten Signalkontakten, können durch wahlweise Anordnung des zweiten Signalkontakts des Verdampfers an einer der drei vorbestimmten Positionen drei verschiedene Solltemperaturen kodiert werden.

Bei einem Leistungsquellen-Modul, wie es hier beschrieben ist, sind insbesondere zwei oder mehr Signalkontakte des Leistungsquellen-Moduls auf einem zu mindestens einem Leistungskontakt des Leistungsquellen-Moduls konzentrischen Kreis angeordnet.

Ein elektrisches Rauch- oder Dampfsystem umfasst einen Verdampfer, wie er hier beschrieben ist, und ein Leistungsquellen-Modul, wie es hier beschrieben ist.

Nachfolgend werden Ausführungsbeispiele anhand der beigefügten Figuren näher erläutert. Es zeigen:
- Figur 1: eine schematische Darstellung einer E-Zigarette;
- Figur 2: eine weitere schematische Darstellung der E-Zigarette aus Figur 1;
- Figur 3: eine schematische Darstellung einer alternativen Ausgestaltung eines Heizelements der E-Zigarette aus den Figuren 1 und 2;
- Figur 4: eine schematische Darstellung einer Schnittstelle eines Akkuträgers der E-Zigarette aus den Figuren 1 und 2.

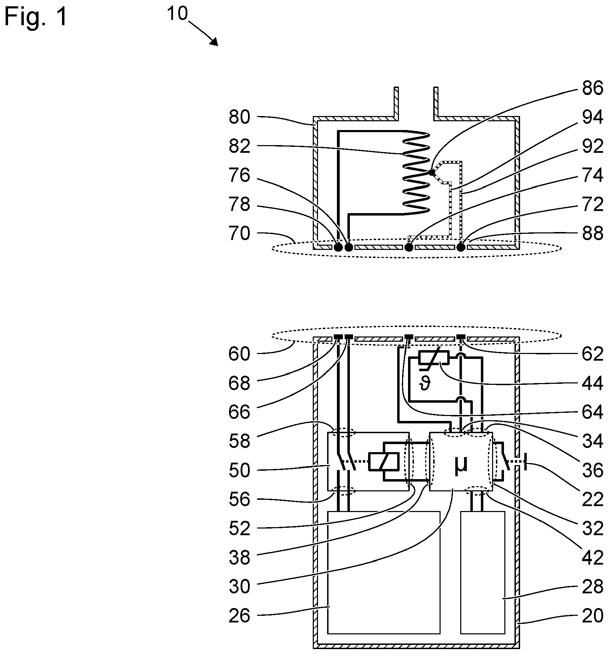

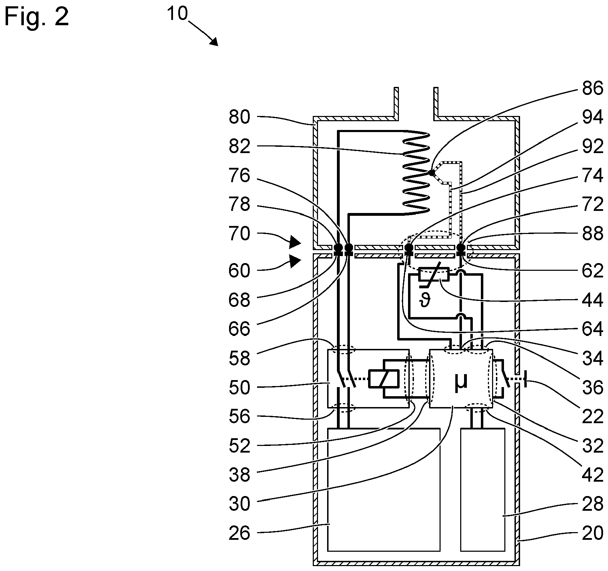

Figur 1 zeigt eine schematische Darstellung einer E-Zigarette 10 als Beispiel eines elektrischen Rauch- oder Dampfsystems zum Erzeugen eines inhalierbaren Aerosols aus einem Liquid. Das Liquid und damit auch das Aerosol kann Nikotin und/oder Aromen enthalten oder beim Verdampfen freisetzen. Die E-Zigarette 10 umfasst einen Akkuträger 20 und einen Verdampfer 80, die in Figur 1 von einander beabstandet dargestellt sind, jedoch wie anhand der Figur 2 beschrieben mit einander mechanisch und elektrisch verbunden werden können. Gehäuse des Akkuträgers 20 und des Verdampfers 80 sind im Schnitt dargestellt, um Bauteile und Bestandteile im Inneren dieser Gehäuse sichtbar zu machen.

Der Akkuträger 20 ist ein Beispiel für ein Leistungsquellen-Modul zur Bereitstellung elektrischer Leistung für den Verdampfer 80.

Der Akkuträger 20 umfasst eine Benutzerschnittstelle 22 zum Empfangen einer Benutzereingabe. Bei dem dargestellten Beispiel ist die Benutzerschnittstelle 22 als einfacher elektrischer Taster ausgebildet. Durch Betätigen der Benutzerschnitstelle, nämlich Drücken des Tasters kann ein Benutzer die Erzeugung von Aerosol anfordern.

Der Akkuträger 20 umfasst ferner eine erste Leistungsquelle 26 und eine zweite Leistungsquelle 28. Die erste Leistungsquelle 26 umfasst insbesondere eine oder mehrere Sekundärzellen (auch als Akkumulatoren bezeichnet) und ist zur Bereitstellung elektrischer Leistung für den Verdampfer 80 vorgesehen und ausgebildet. Alternativ kann die erste Leistungsquelle 26 eine oder mehrere Primärzellen, Brennstoffzellen oder andere Quellen elektrischer Leistung enthalten.

Die zweite Leistungsquelle 28 ist bei dem dargestellten Beispiel nur zur Bereitstellung elektrischer Leistung für den Akkuträger selbst vorgesehen und ausgebildet und umfasst beispielsweise eine oder mehrere Primärzellen. Alternativ kann die zweite Leistungsquelle 28 eine oder mehrere Sekundärzellen oder andere Leistungsquellen oder einen oder mehrere Kondensatoren umfassen. Alternativ kann die zweite Leistungsquelle 28 eine Schaltung zur Entnahme elektrischer Leistung aus der ersten Leistungsquelle 26 und zur Bereitstellung elektrischer Leistung mit einer vorbestimmten und von der Spannung der ersten Leistungsquelle 26 weitgehend oder vollständig unabhängigen Spannung umfassen. In jedem Fall ist der Leistungsausgang der zweiten Leistungsquelle 28 von der ersten Leistungsquelle 26 insbesondere galvanisch getrennt oder hochohmig isoliert.

Der Akkuträger 20 umfasst ferner eine Temperaturmess- und -regelungseinrichtung 30, die insbesondere durch einen Mikrocontroller gebildet wird oder einen Mikrocontroller umfasst. Die Temperaturmess- und -regelungseinrichtung 30 weist einen ersten Signaleingang 32, der mit der Benutzerschnittstelle 22 gekoppelt ist, um von dieser ein Anforderungssignal zu empfangen, auf. Ferner weist die Temperaturmess- und -regelungseinrichtung 30 einen (hochohmigen) zweiten Signaleingang 34 zum Empfangen eines elektrischen Spannungssignals, auf. Ferner weist die Temperaturmess- und -regelungseinrichtung 30 einen dritten Signaleingang 36, der mit einem Temperatursensor 44 verbunden ist, zum Empfangen eines Temperatursignals auf. Ferner weist die Temperaturmess- und -regelungseinrichtung 30 einen Steuersignalausgang 38 zum Bereitstellen eines Steuersignals abhängig von dem Anforderungssignal, dem Spannungssignal und dem Temperatursignal auf. Ferner weist die Temperaturmess- und -regelungseinrichtung 30 einen Leistungseingang 42 zum Empfangen elektrischer Leistung, der mit der zweiten Leistungsquelle 28 verbunden ist, auf.

Der Akkuträger 20 umfasst ferner eine Leistungssteuerung 50. Die Leistungssteuerung 50 weist einen Steuersignaleingang 52, der mit dem Steuersignalausgang 38 der Temperaturmess- und -regelungseinrichtung 30 gekoppelt ist, auf, um das von der Temperaturmess- und -regelungseinrichtung 30 erzeugte Steuersignal zu empfangen. Ferner weist die Leistungssteuerung 50 einen Leistungseingang 56, der mit der ersten Leistungsquelle 26 verbunden ist, auf, um von der ersten Leistungsquelle 26 bereitgestellte elektrische Leistung zu empfangen. Ferner weist die Leistungssteuerung 50 einen Leistungsausgang 58 zum durch das am Steuersignaleingang 52 von der Temperaturmess- und -regelungseinrichtung 30 empfangende Steuersignal gesteuerten Abgeben elektrischer Leistung auf.

Die Leistungssteuerung 50 ist beispielhaft als Relais dargestellt. Die Leistungssteuerung 50 umfasst beispielsweise ein Halbleiter-Relais zum Verbinden des Leistungsausgangs 58 mit dem Leistungseingang 56. Alternativ ist die Leistungssteuerung 50 vorgesehen und ausgebildet, um abgegebene Leistung nicht nur an- und auszuschalten, sondern in mehreren oder vielen Stufen oder kontinuierlich zwischen einem vorbestimmten Minimalwert (insbesondere Null) und einem vorbestimmten Maximalwert zu steuern.

Der Steuersignaleingang 52 der Leistungssteuerung 50 einerseits und die Leistungsein- und -ausgänge 56, 58 der Leistungssteuerung 50 andererseits sind hochohmig isoliert oder galvanisch getrennt, beispielsweise durch einen Optokoppler. Alternativ ist der Steuersignalausgang 38 der Temperaturmess- und -regelungseinrichtung 30 einerseits von dem zweiten Signaleingang 34 der Temperaturmess- und -regelungseinrichtung 30 andererseits hochohmig isoliert oder galvanisch getrennt, beispielsweise durch einen Optokoppler. Die resultierende hochohmige Isolierung oder galvanische Trennung des zweiten Signaleingangs 34 von den Leistungsein- und -ausgängen 56, 58 der Leistungssteuerung 50 ermöglicht eine Messung einer an dem zweiten Signaleingang 34 anliegenden Spannung weitgehend oder vollständig unabhängig von elektrischen Spannungen zwischen dem zweiten Signaleingang 34 und den Leistungsein- und -ausgängen 56, 58 der Leistungssteuerung 50.

Der Akkuträger 20 weist ferner eine Schnittstelle 60 zur mechanischen und elektrischen Verbindung mit einer korrespondierenden Schnittstelle 70 eines Verdampfers 80 der E-Zigarette 10 auf. Einrichtungen zur mechanischen Verbindung - beispielsweise ein oder mehrere Schraubgewinde, eine Renkverbindung (oft auch als Bajonettverbindung bezeichnet), eine Rastverbindung oder Magneten - sind in Figur 1 nicht dargestellt.

Die Schnittstelle 60 des Akkuträgers 20 weist einen ersten Signalkontakt 62 und einen zweiten Signalkontakt 64, die mit dem zweiten Signaleingang 34 verbunden sind, und einen ersten Leistungskontakt 66 und einen zweiten Leistungskontakt 68, die mit dem Leistungsausgang 58 der Leistungssteuerung 50 verbinden sind, auf.

Die Schnittstelle 70 des Verdampfers 80 weist einen ersten Signalkontakt 72 und einen zweiten Signalkontakt 74, die zu dem ersten Signalkontakt 62 bzw. dem zweiten Signalkontakt 64 der Schnittstelle 60 des Akkuträgers 20 korrespondieren, auf. Der erste Signalkontakt 72 der Schnittstelle 70 des Verdampfers 80 ist durch einen ersten Leiter 92 aus einem ersten Material und einen zweiten Leiter 94 aus einem zweiten Material, das von dem ersten Material verschieden ist, mit dem zweiten Kontakt 74 der Schnittstelle 70 des Verdampfers 80 verbunden. An jedem Übergang zwischen zwei unterschiedlichen Materialien entsteht aufgrund des Seebeck-Effekts eine Thermospannung, die von der Temperatur des Übergangs abhängig ist. Die unmittelbare Verbindung der beiden Leiter 92, 94 wird als Messstelle 86 bezeichnet, oft auch verkürzt als Thermoelement.

Die Schnittstelle 70 des Verdampfers 80 weist ferner einen ersten Leistungskontakt 76 und einen zweiten Leistungskontakt 78, die zu dem ersten Leistungskontakt 66 bzw. dem zweiten Leistungskontakt 68 der Schnittstelle 60 des Akkuträgers korrespondieren, auf. Die Leistungskontakte 76, 78 der Schnittstelle 70 des Verdampfers 80 sind durch ein Heizelement 82 zum Aufnehmen elektrischer Leistung und Abgeben thermischer Leistung verbunden. Das Heizelement 82 ist bei dem dargestellten Beispiel eine Helix aus Widerstandsdraht.

Figur 2 zeigt eine weitere schematische Darstellung des Akkuträgers 20 und des Verdampfers 80. Die Art der Darstellung, insbesondere die Lage der Zeichenebene, entspricht derjenigen der Figur 1. Die Darstellung in Figur 2 unterscheidet sich von der Darstellung in Figur 1 dadurch, dass der Akkuträger 20 und der Verdampfer 80 auf eine nicht dargestellte Weise mechanisch miteinander verbunden sind, so dass der erste Signalkontakt 62 der Schnittstelle 60 des Akkuträgers 20 den ersten Signalkontakt 72 der Schnittstelle 70 des Verdampfers 80 berührt, der zweite Signalkontakt 64 der Schnittstelle 60 des Akkuträgers 20 den zweiten Signalkontakt 74 der Schnittstelle 70 des Verdampfers 80 berührt, der erste Leistungskontakt 66 der Schnittstelle 60 des Akkuträgers 20 den ersten Leistungskontakt 76 der Schnittstelle 70 des Verdampfers 80 berührt und der zweite Leistungskontakt 68 der Schnittstelle 60 des Akkuträgers 20 den zweiten Leistungskontakt 78 der Schnittstelle 70 des Verdampfers 80 berührt.

Die Signalkontakte 62, 64 der Schnittstelle 60 des Akkuträgers 20 und die Signalkontakte 72, 74 der Schnittstelle 70 des Verdampfers 80 bilden eine Vergleichsstelle 88, deren Temperatur von dem Temperatursensor 44 erfasst wird. Dazu sind die Signalkontakte 62, 64, 72, 74 innerhalb eines möglichst kleinen Raumvolumens angeordnet und untereinander thermisch möglichst gut gekoppelt. Ferner ist der Temperatursensor 44 möglichst nahe an den Signalkontakten 62, 64, 72, 74 angeordnet, insbesondere zwischen diesen oder in deren unmittelbarer Nähe.

Wenn und soweit innerhalb des Akkuträgers 20 die beiden Leiter zwischen den Signalkontakten 72, 74 und dem zweiten Signaleingang 34 der Temperaturmess- und -regelungseinrichtung 30 aus dem gleichen Material - beispielsweise Kupfer - bestehen, liegt am hochohmigen zweiten Signaleingang 34 der Temperaturmess- und -regelungseinrichtung 30 die Differenz zwischen den Thermospannungen an der Messstelle 86 und an der Vergleichsstelle 88 an. Die Temperaturmess- und -regelungseinrichtung 30 berechnet aus der mittels des Temperatursensors 44 erfassten Temperatur der Vergleichsstelle 88 die an der Vergleichsstelle 88 vorliegende Thermospannung, aus dieser und der am zweiten Signaleingang 34 der Temperaturmess- und -regelungseinrichtung 30 erfassten Spannung die an der Messstelle 86 vorliegende Thermospannung und aus dieser die Temperatur der Messstelle 86.

Die Messstelle 86 ist mittels einer Punktschweißung unmittelbar mechanisch und damit auch thermisch mit dem Heizelement 82 verbunden. Da die Messstelle 86 selbst als kleinvolumige Verbindung zweier dünner Leiter 92, 94 eine geringe thermische Trägheit aufweist und mit dem Heizelement 82 unmittelbar thermisch gekoppelt ist, erlaubt die gezeigte Anordnung eine extrem verzögerungsarme, also schnelle und gleichzeitig präzise Messung der Temperatur des Heizelements 82.

Die Messstelle 86 ist in der Mitte des Heizelements 82 angeordnet, in der die höchste Temperatur des Heizelements 82 zu erwarten ist. Diese Anordnung ermöglicht die zuverlässige Erfassung der Maximaltemperatur des Heizelements 82.

Wenn die Temperaturmess- und -regelungseinrichtung an ihrem ersten Signaleingang 32 ein von einer Benutzerin oder einem Benutzer an der Benutzerschnittstelle 22 erzeugtes Anforderungssignal empfängt, stellt die Temperaturmess- und -regelungseinrichtung 30 an ihrem Steuersignalausgang 38 ein Steuersignal bereit, das die Leistungssteuerung 50 derart steuert, dass das Heizelement 82 bis zu einer vorbestimmten Maximaltemperatur aufgeheizt und dann bei dieser Maximaltemperatur gehalten wird.

Wie erwähnt und in den Figuren 1 und 2 gezeigt kann der zweite Signaleingang 34 der Temperaturmess- und -regelungseinrichtung 30 von den Leistungsein- und - ausgängen 56, 58 der Leistungssteuerung 50 und damit auch von der ersten Leistungsquelle 26 und hinsichtlich der Verbindung über die Leistungssteuerung 50 auch von dem Heizelement galvanisch getrennt sein. Alternativ und abweichend von der Darstellung in Figur 1 kann eine hochohmige Verbindung (insbesondere mindestens 10 kΩ oder mindestens 100 kΩ) zwischen dem Leistungseingang 42 der Temperaturmess- und -regelungseinrichtung 30 und dem Leistungseingang 56 der Leistungssteuerung und/oder zwischen dem Steuersignalausgang 38 der Temperaturmess- und -regelungseinrichtung 30 und dem Steuersignaleingang 52 der Leistungssteuerung bestehen. Dies kann den Verzicht auf Optokoppler und/oder den Verzicht auf Primär- oder Sekundärzelle oder ähnliches in der zweiten Leistungsquelle 28 für die Temperaturmess- und Regelungseinrichtung 30 ermöglichen. Stattdessen kann die zweite Leistungsquelle 28 elektrische Leistung aus der ersten Leistungsquelle 26 beziehen.

Sowohl eine galvanische Trennung als auch eine hochohmige Verbindung kann ein genaues Messen kleiner Differenzen (typischerweise in der Größenordnung eines mV) der kleinen Thermospannungen an Messstelle 86 und Vergleichsstelle 88 selbst dann ermöglichen, wenn die Messstelle 86 durch die beschriebene Punktschweißung mit dem Heizelement 82 galvanisch verbunden ist.

Ein Vorteil der in den Figuren 1 und 2 gezeigten Anordnung mit einer separaten zweiten Leistungsquelle 28 für die Temperaturmess- und -regelungseinrichtung 30 kann jedoch darin bestehen, dass auch ohne besonderen schaltungstechnischen Aufwand Rückwirkungen von Schwankungen der Ausgangsspannung der ersten Leistungsquelle 26 auf die Temperaturmess- und -regelungseinrichtung 30 vermieden werden können.

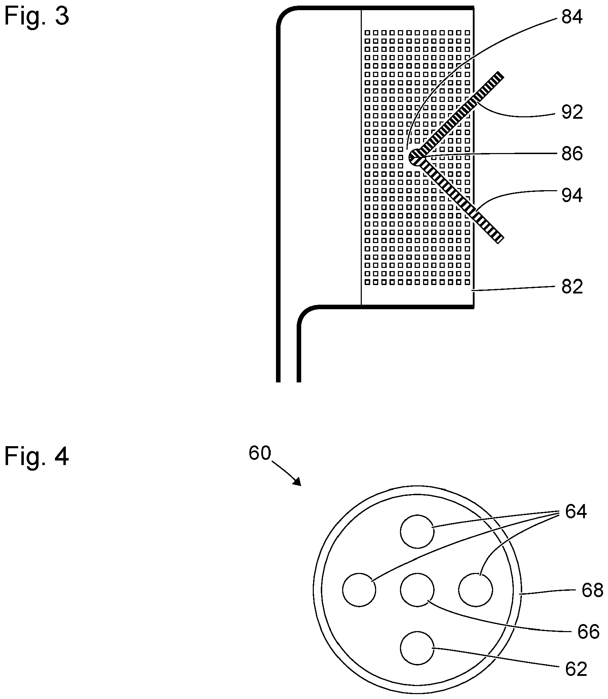

Figur 3 zeigt eine schematische Darstellung einer alternativen Ausführungsform eines Heizelements 82. Das in Figur 3 gezeigte Heizelement 82 ist als flächiges rechteckiges Netz oder Gitter mit zahlreichen Ausnehmungen oder Öffnungen oder Löchern ausgebildet. In der Mitte des Heizelements 82 ist ein vollflächiger Bereich 84 ohne Ausnehmungen oder Öffnungen oder Löcher vorgesehen. Die Messstelle 86 ist an dem vollflächigen Bereich 84 angeordnet, mit dem sie besonders zuverlässig und dauerhaft verbunden werden kann, beispielsweise durch eine Punktschweißung.

Abweichend von der Darstellung in Figur 3 können der erste Leiter 92 und der zweite Leiter 94 an mehreren Stellen, also an mehreren Messstellen 86, miteinander verbunden sein. In diesem Fall sind die mehreren Messstellen 86 insbesondere entlang einer Äquipotentiallinie, also einer Linie orthogonal zum Stromfluss und zur Stromdichteverteilung in dem Heizelement 82 angeordnet. Damit kann vermieden werden, dass ein Teil des zur ohmschen Heizung durch das Heizelement 82 fließenden Stroms durch die Leiter 92, 94 fließt.

Es ist jedoch vorteilhaft, wenn die Leiter 92, 94 nur an der Messstelle 86 oder den Messstellen 86 mit dem Heizelement 82 leitfähig verbunden sind. Wenn beispielsweise nur einer der Leiter 92, 94 an einem weiteren Ort, der nicht auf einer Äquipotentiallinie mit der Messstelle 86 oder den Messstellen 86 liegt, elektrisch leitfähig mit dem Heizelement 82 verbunden ist, fließt ein Teil des für die ohmsche Heizung des Heizelements 82 vorgesehenen Stroms durch den Leiter 92, 94 und erzeugt aufgrund dessen Widerstands eine Spannung, die die Messung der Thermospannung verfälschen und/oder die Temperaturmess- und -regelungseinrichtung 30 zerstören kann.

Viele elektrisch isolierende Materialien, vor allem mechanisch flexible und gleichzeitig elektrisch isolierende Materialien können bei Erwärmung gesundheitsschädliche Stoffe freisetzen. Deshalb sind die Leiter 92, 94 insbesondere nicht elektrisch isoliert. Die Vermeidung eines elektrisch leitfähigen Kontakts zwischen dem Heizelement 82 und einem Leiter 92, 94 abseits der Messstelle 86 oder der Messstellen 86 kann dann durch die räumliche Anordnung und die Gestalt der Leiter 92, 94 gewährleistet werden.

Figur 4 zeigt eine schematische Darstellung der Schnittstelle 60 des Akkuträgers 20. Die Zeichenebene der Figur 4 ist orthogonal zu den Zeichenebenen der Figuren 1 und 2.

Bei dem dargestellten Beispiel ist die Schnittstelle 60 kreisförmig. Die Leistungskontakte 66, 68 sind konzentrisch angeordnet, wobei ein Leistungskontakt 66 zentral angeordnet ist und der andere Leistungskontakt kreisförmig ausgebildet und beispielsweise am Rand des Gehäuse des Akkuträgers 20 angeordnet ist. Einer der beiden Leistungskontakte 66, 68 kann ferner als Gewinde zur lösbaren mechanischen Verbindung des Akkuträgers 20 mit dem Verdampfer ausgebildet sein.

Die Schnittstelle 60 des Akkuträgers 20 weist einen ersten Signalkontakt 62 und drei zweite Signalkontakte 64 auf. Bei dem dargestellten Beispiel sind alle Signalkontakte 62, 64 auf einem zu den Leistungskontakten 66, 68 konzentrischen Kreisumfang angeordnet. Die drei zweiten Signalkontakte 64 sind zur alternativen Kontaktierung durch einen einzigen zweiten Signalkontakt 74 der Schnittstelle 70 des Verdampfers 80 (vgl. Figuren 1, 2) vorgesehen. Die Anordnung des zweiten Signalkontakts 74 der Schnittstelle 70 des Verdampfers 80 korrespondierend zu einem der zweiten Signalkontakte 64 der Schnittstelle 60 des Akkuträgers 20 kodiert eine von drei alternativen vorgesehenen Soll- oder Maximaltemperaturen. Die Temperaturmess- und -regelungseinrichtung 30 dekodiert die vorgesehene Soll- oder Maximaltemperatur eines Verdampfers, indem sie erfasst, welcher der zweiten Signalkontakte 64 durch den zweiten Signalkontakt 74 der Schnittstelle 70 des Verdampfers 80 kontaktiert ist.

### Bezugszeichenliste:

- **10**: **E-Zigarette** als Beispiel eines elektrischen Rauch- oder Dampfsystems
- **20**: **Akkuträger** als Beispiel eines Leistungsquellen-Moduls der E-Zigarette 10, zur gesteuerten Abgabe elektrischer Leistung an den Verdampfer 60
- 22: Benutzerschnittstelle des Akkuträgers 20
- 26: erste Leistungsquelle des Akkuträgers 20 zur Bereitstellung elektrischer Leistung für den Verdampfer 80
- 28: zweite Leistungsquelle des Akkuträgers 20 zur Bereitstellung elektrischer Leistung für die Temperaturmess- und -regelungseinrichtung 30
- **30**: **Temperaturmess- und -regelungseinrichtung** des Akkuträgers 20, insbesondere Mikrocontroller
- 32: erster Signaleingang der Temperaturmess- und -regelungseinrichtung 30, zum Empfangen eines Anforderungssignals von der Benutzerschnittstelle 22
- 34: zweiter Signaleingang der Temperaturmess- und -regelungseinrichtung 30, über die Vergleichsstelle 88 mit der Messstelle 86 gekoppelt, zum Empfangen eines Spannungssignals
- 36: dritter Signaleingang der Temperaturmess- und -regelungseinrichtung 30, zum Empfangen eines Widerstandssignals von einem Temperatursensor 44 an der Vergleichsstelle 88
- 38: Steuersignalausgang der Temperaturmess- und -regelungseinrichtung 30 zum Steuern der Leistungssteuerung 50
- 42: Leistungseingang der Temperaturmess- und -regelungseinrichtung 30, zum Empfangen elektrischer Leistung von der zweiten Leistungsquelle 28
- 44: Temperatursensor an der Vergleichsstelle 88
- **50**: **Leistungssteuerung** des Akkuträgers 20
- 52: Steuersignaleingang der Leistungssteuerung 50, zum Empfangen eines Steuersignals von dem Steuerausignalsgang 38 der Regelungseinrichtung 30
- 56: Leistungseingang der Leistungssteuerung 50, zum Empfangen elektrischer Leistung von der ersten Leistungsquelle 26
- 58: Leistungsausgang der Leistungssteuerung 50, zum Abgeben elektrischer Leistung an den Verdampfer 80
- **60**: **Schnittstelle** des Akkuträgers 20 zur mechanischen und elektrischen Verbindung mit dem Verdampfer 80
- 62: erster elektrischer Signalkontakt der Schnittstelle 60 des Akkuträgers 20, korrespondierend zum ersten elektrischen Signalkontakt 72 der Schnittstelle 70 des Verdampfers 80
- 64: zweiter elektrischer Signalkontakt der Schnittstelle 60 des Akkuträgers 20, korrespondierend zum zweiten elektrischen Signalkontakt 72 der Schnittstelle 70 des Verdampfers 80
- 66: erster elektrischer Leistungskontakt der Schnittstelle 60 des Akkuträgers 20, korrespondierend zum ersten elektrischen Leistungskontakt 72 der Schnittstelle 70 des Verdampfers 80
- 68: zweiter elektrischer Leistungskontakt der Schnittstelle 60 des Akkuträgers 20, korrespondierend zum zweiten elektrischen Leistungskontakt 72 der Schnittstelle 70 des Verdampfers 80
- **70**: **Schnittstelle** des Verdampfers 80, zur mechanischen und elektrischen Verbindung mit dem Akkuträger 20
- 72: erster elektrischer Signalkontakt der Schnittstelle 70 des Verdampfers 80, korrespondierend zum ersten elektrischen Signalkontakt 62 der Schnittstelle 60 des Akkuträgers 20
- 74: zweiter elektrischer Signalkontakt der Schnittstelle 70 des Verdampfers 80, korrespondierend zum zweiten elektrischen Signalkontakt 62 der Schnittstelle 60 des Akkuträgers 20
- 76: erster elektrischer Leistungskontakt der Schnittstelle 70 des Verdampfers 80, korrespondierend zum ersten elektrischen Leistungskontakt 62 der Schnittstelle 60 des Akkuträgers 20
- 78: zweiter elektrischer Leistungskontakt der Schnittstelle 70 des Verdampfers 80, korrespondierend zum zweiten elektrischen Leistungskontakt 62 der Schnittstelle 60 des Akkuträgers 20
- **80**: **Verdampfer** der E-Zigarette 10
- 82: Heizelement des Verdampfers 80, zur Aufnahme elektrischer Leistung und zur Abgabe thermischer Leistung
- 84: vollflächiger Bereich des Heizelements 80
- 86: Messstelle eines Thermoelements als Temperatursensor an dem Heizelement 82
- 88: Vergleichsstelle
- 92: erster Leiter aus einem ersten Material, die Messstelle 86 mit der Vergleichsstelle 88 verbindend
- 94: zweiter Leiter aus einem zweiten Material, die Messstelle 86 mit der Vergleichsstelle 88 verbindend

## Patentansprüche

1. **Verdampfer** (80) für eine E-Zigarette oder ein anderes elektrisches Rauch- oder Dampfsystem zum Verdampfen eines Liquids und Erzeugen eines inhalierbaren Aerosols, mit
einem **Heizelement** (82) zur Aufnahme elektrischer Leistung und zur Abgabe thermischer Leistung an ein zu verdampfendes Liquid;
einem **Temperatursensor** (86) zum Erfassen der Temperatur des Heizelements (82),
wobei
der Temperatursensor die Messstelle (86) eines Thermoelements umfasst und die Messstelle (86) und das Heizelement (82) **unmittelbar mechanisch und elektrisch leitfähig verbunden und thermisch gekoppelt** sind.

2. Verdampfer (80) gemäß dem vorangehenden Anspruch, bei dem
der Temperatursensor (86) und das Heizelement (82) durch eine **Schweißverbindung** miteinander unmittelbar mechanisch verbunden und thermisch gekoppelt sind.

3. Verdampfer (80) gemäß einem der vorangehenden Ansprüche, bei dem
das Heizelement (82) als **Netz** oder **Gitter** ausgebildet ist,
das Heizelement (82) einen **vollflächigen Bereich** (84) ohne Löcher, Maschen oder andere Ausnehmungen aufweist,
der Temperatursensor (86) mit dem vollflächigen Bereich (84) des Heizelements (82) unmittelbar mechanisch verbunden und thermisch gekoppelt ist.

4. Verdampfer (80) gemäß einem der vorangehenden Ansprüche, bei dem
**mehrere Temperatursensoren** (86) untereinander räumlich beabstandet und jeweils mit dem Heizelement (82) unmittelbar mechanisch verbunden und thermisch gekoppelt sind.

5. **Leistungsquellen-Modul** (20) mit:
einer **Schnittstelle** (60) zur mechanischen und elektrischen Verbindung des Leistungsquellen-Moduls (20) mit einer korrespondierenden Schnittstelle (70) an einem Verdampfer (80);
einer **Temperaturmessschaltung** (30) zur Erfassung einer Differenz einer Thermospannung an einer mit einem Heizelement (82) des Verdampfers (80) unmittelbar mechanisch und elektrisch leitfähig verbundenen und thermisch gekoppelten Messstelle (86) eines **Thermoelements** und einer Thermospannung an einer Vergleichsstelle (88);
einer mit der Temperaturmessschaltung (30) gekoppelten **Leistungsquelle** (26) zum Bereitstellen elektrischer Leistung für das Heizelement (82) des Verdampfers (80) abhängig von dem durch die Temperaturmessschaltung (30) erfassten Temperatursignal, bei dem
die Schnittstelle (60) des Leistungsquellen-Moduls (20) elektrische **Leistungskontakte** (66, 68) zum Übertragen elektrischer Leistung über korrespondierende elektrische Leistungskontakte (76, 78) des Verdampfers (80) zu dem Heizelement (82) des Verdampfers (80) und elektrische **Signalkontakte** (62, 64) zum Empfangen einer Thermospannung an der Messstelle (86) des Verdampfers (80) über korrespondierende Signalkontakte (72, 74) des Verdampfers (80) umfasst,
die **Vergleichsstelle** (88) durch die **Signalkontakte** (72, 74) gebildet wird.

6. Leistungsquellen-Modul (20) gemäß dem vorangehenden Anspruch, ferner mit
einem **weiteren Temperatursensor** (44) zur Messung der Temperatur der Vergleichsstelle (88),
wobei der weitere Temperatursensor (44) **zwischen den Signalkontakten** (72, 74) des Leistungsquellen-Moduls (20) angeordnet ist.

7. Leistungsquellen-Modul (20) gemäß einem der Ansprüche 5 und 6, bei dem
die Temperaturmessschaltung (30) einen hochohmigen und linearen oder nicht-linearen Differenzspannungsverstärker umfasst.

8. Leistungsquellen-Modul (20) gemäß einem der Ansprüche 5 bis 7, bei dem
die Temperaturmessschaltung (30) eine eigene Leistungsquelle, die von den Leistungskontakten (66, 68) des Leistungsquellen-Moduls (20) galvanisch isoliert ist, umfasst.

9. Leistungsquellen-Modul (20) gemäß einem der Ansprüche 5 bis 8, bei dem
die Temperaturmessschaltung (30) einen Analog-Digital-Konverter und eine ganzzahlige Verarbeitung eines durch den Analog-Digital-Konverter erzeugten digitalen Ausgangssignals umfasst.

10. Leistungsquellen-Modul (20) gemäß einem der Ansprüche 5 bis 9, bei dem
die Temperaturmessschaltung (30) und eine mit der Temperaturmessschaltung (30) gekoppelte Leistungssteuerung (50) **analog** aufgebaut sind.

11. Leistungsquellen-Modul (20) gemäß einem der Ansprüche 5 bis 10, bei dem
die Schnittstelle (60) des Leistungsquellen-Moduls (20) eine **Dekodiereinrichtung** (30, 64) zum Dekodieren einer durch die Schnittstelle (70) des Verdampfer-Moduls (80) kodierten **Solltemperatur** aufweist.

12. Leistungsquellen-Modul (20) gemäß dem vorangehenden Anspruch, bei dem
die Signalkontakte (62, 64) des Leistungsquellen-Moduls (20) korrespondierend zu vorbestimmten möglichen Positionen der Signalkontakte (72, 74) des Verdampfers (80) angeordnet sind,
die **Solltemperatur** durch die **Anordnung der Signalkontakte** (72, 74) an der Schnittstelle (70) des Verdampfers (80) kodiert ist,
die Dekodiereinrichtung (30, 64) zur Dekodierung der Solltemperatur anhand der durch die Signalkontakte (72, 74) des Verdampfers (80) kontaktierten Signalkontakte (62, 64) des Leistungsquellen-Moduls (20) ausgebildet ist.

13. Leistungsquellen-Modul (20) gemäß einem der Ansprüche 5 bis 12, bei dem
zwei oder mehr Signalkontakte (62, 64) des Leistungsquellen-Moduls (20) auf einem zu mindestens einem Leistungskontakt (66) des Leistungsquellen-Moduls (20) **konzentrischen Kreis** angeordnet sind.

14. **E-Zigarette oder anderes elektrisches Rauch- oder Dampfsystem** (10) zum Verdampfen eines Liquids zum Erzeugen eines inhalierbaren Aerosols, mit
einem **Verdampfer** (80) gemäß einem der Ansprüche 1 bis 4;
einem **Leistungsquellen-Modul** (20) gemäß einem der Ansprüche 5 bis 13.

## Claims

1. **A vaporizer** (80) for an e-cigarette or other electric smoking or vaporizing system for vaporizing a liquid and generating an inhalable aerosol, comprising:
a **heating element** (82) for receiving electrical power and for delivering thermal power to a liquid to be vaporized;
a **temperature sensor** (86) for sensing the temperature of the heating element (82),
wherein
the temperature sensor comprises the sensing junction (86) of a thermocouple and the sensing junction (86) and the heating element (82) are **directly mechanically and electrically conductively connected and thermally coupled.**

2. The Vaporizer (80) according to the preceding claim, wherein
the temperature sensor (86) and the heating element (82) are directly mechanically connected and thermally coupled to each other by a **welded joint.**

3. The Vaporizer (80) according to any of the preceding claims, wherein
the heating element (82) is formed as a **mesh** or **grid,**
the heating element (82) has a **full-surface region** (84) without holes,
meshes or other recesses,
the temperature sensor (86) is directly mechanically connected and thermally coupled to the full-surface region (84) of the heating element (82).

4. The Vaporizer (80) according to any of the preceding claims, wherein
a **plurality of temperature sensors** (86) are spatially distanced from one another and are each directly mechanically connected and thermally coupled to the heating element (82).

5. **A power source module** (20) comprising:
an **interface** (60) for mechanically and electrically connecting the power source module (20) to a corresponding interface (70) at a vaporizer (80);
a **temperature measuring circuit** (30) for measuring a difference of a thermoelectric voltage at a thermocouple's sensing junction (86) directly mechanically and electrically conductively connected and
thermally coupled to a heating element (82) of the vaporizer (80) and a thermoelectric voltage at a reference junction (88);
a **power source** (26) coupled to the temperature measuring circuit (30) for providing electrical power to the heating element (82) of the vaporizer (80) in response to the temperature signal measured by the temperature measuring circuit (30),
wherein the interface (60) of the power source module (20) includes electrical **power contacts** (66, 68) for transmitting electrical power via corresponding electrical power contacts (76, 78) of the vaporizer (80) to the heating element (82) of the vaporizer (80) and electrical **signal contacts** (62, 64) for receiving a thermoelectric voltage of the sensing junction (86) at the vaporizer (80) via corresponding signal contacts (72, 74) of the vaporizer (80),
the **reference junction** (88) is formed by the **signal contacts** (72, 74).

6. The power source module (20) according to the preceding claim, further comprising
a **further temperature sensor** (44) for sensing the temperature of the reference junction (88),
wherein the further temperature sensor (44) is arranged **between the signal contacts** (72, 74) of the power source module (20).

7. The power source module (20) according to any of the claims 5 and 6, wherein
the temperature measuring circuit (30) comprises a high impedance and linear or non-linear differential voltage amplifier.

8. The power source module (20) according to any of the claims 5 through 7, wherein
the temperature measuring circuit (30) comprises a dedicated power source galvanically insulated from the power contacts (66, 68) of the power source module (20).

9. The power source module (20) according to any of claims 5 through 8, wherein
the temperature measuring circuit (30) comprises an analog-to-digital converter and integer processing of a digital output signal generated by the analog-to-digital converter.

10. The power source module (20) according to any of the claims 5 through 9, wherein
the temperature measuring circuit (30) and a power controller (50) coupled to the temperature measuring circuit (30) are of **analog** construction.

11. The power source module (20) according to any of the claims 5 trough 10, wherein
the interface (60) of the power source module (20) comprises **decoding means** (30, 64) for decoding a **target temperature** encoded by the interface (70) of the vaporizer module (80).

12. The power source module (20) according to the preceding claim, wherein
the signal contacts (62, 64) of the power source module (20) are positioned corresponding to predetermined optional positions of the signal contacts (72, 74) of the vaporizer (80),
the **target temperature** is encoded in the **positions of the signal contacts** (72, 74) at the interface (70) of the vaporizer (80),
the decoding device (30, 64) is configured for decoding the target temperature on the basis of the signal contacts (62, 64) of the power source module (20) which are contacted by the signal contacts (72, 74) of the vaporizer (80).

13. The power source module (20) according to any of the claims 5 through 12, wherein
two or more signal contacts (62, 64) of the power source module (20) are positioned on a **circle concentric** to at least one power contact (66) of the power source module (20).

14. **E-cigarette or other electric smoking or vaporizing system** (10) for vaporizing a liquid for production of an inhalable aerosol, comprising
a **vaporizer** (80) according to any of the claims 1 through 4;
a **power source module** (20) according to any of the claims 5 through 13.

## Revendications

1. **Vaporisateur** (80) pour une e-cigarette ou un autre système électrique pour fumer ou pour vaporiser pour la vaporisation d'un liquide et la production d'un aérosol inhalable, avec
un **élément chauffant** (82) pour recevoir une puissance électrique et pour émettre une puissance thermique à un liquide à vaporiser ;
un **capteur de température** (86) pour détecter la température de l'élément chauffant (82),
le capteur de température comprenant le point de mesure (86) d'un thermocouple, et le point de mesure (86) et l'élément chauffant (82) étant **directement reliés de manière mécanique et électriquement conductrice et couplés thermiquement.**

2. Vaporisateur (80) selon la revendication précédente, dans lequel
le capteur de température (86) et l'élément chauffant (82) sont directement reliés ensemble mécaniquement et couplés thermiquement par une **liaison soudée.**

3. Vaporisateur (80) selon l'une des revendications précédentes, dans lequel
l'élément chauffant (82) est réalisé sous la forme d'un **filet** ou d'une **grille,**
l'élément chauffant (82) présente **une zone de surface pleine** (84) sans trous, mailles ou autres évidements,
le capteur de température (86) est directement relié mécaniquement et couplé thermiquement à la zone de surface pleine (84) de l'élément chauffant (82).

4. Vaporisateur (80) selon l'une des revendications précédentes, dans lequel
**plusieurs capteurs de température** (86) sont espacés les uns des autres et sont chacun directement reliés mécaniquement et couplés thermiquement à l'élément chauffant (82).

5. **Module de source de puissance** (20) comprenant :
une **interface** (60) pour la liaison mécanique et électrique du module de source de puissance (20) à une interface correspondante (70) sur un vaporisateur (80) ;
un **circuit de mesure de température** (30) pour la détection d'une différence entre une tension thermoélectrique en un point de mesure (86) d'un **thermocouple** directement relié de manière mécanique et électriquement conductrice et couplé thermiquement à un élément chauffant (82) du vaporisateur (80), et une tension thermoélectrique en un point de comparaison (88) ;
une **source de puissance** (26) couplée au circuit de mesure de température (30) pour fournir une puissance électrique à l'élément chauffant (82) du vaporisateur (80) en fonction du signal de température détecté par le circuit de mesure de température (30), où
l'interface (60) du module de source de puissance (20) comprend des **contacts de puissance** électrique (66, 68) pour transmettre une puissance électrique à l'élément chauffant (82) du vaporisateur (80) par l'intermédiaire de contacts de puissance électrique correspondants (76, 78) du vaporisateur (80), et des **contacts de signaux** électriques (62, 64) pour recevoir une tension thermoélectrique au point de mesure (86) du vaporisateur (80) par l'intermédiaire de contacts de signaux correspondants (72, 74) du vaporisateur (80),
le **point de comparaison** (88) étant formé par les **contacts de signaux** (72, 74).

6. Module de source de puissance (20) selon la revendication précédente, comprenant en outre
un **capteur de température supplémentaire** (44) pour mesurer la température du point de comparaison (88),
le capteur de température supplémentaire (44) étant disposé **entre les contacts de signaux** (72, 74) du module de source de puissance (20).

7. Module de source de puissance (20) selon l'une des revendications 5 et 6, dans lequel
le circuit de mesure de température (30) comprend un amplificateur de tension différentielle à haute impédance, linéaire ou non linéaire.

8. Module de source de puissance (20) selon l'une des revendications 5 à 7, dans lequel
le circuit de mesure de température (30) comprend une source de puissance qui lui est propre et qui est isolée galvaniquement des contacts de puissance (66, 68) du module de source de puissance (20).

9. Module source de puissance (20) selon l'une des revendications 5 à 8, dans lequel
le circuit de mesure de température (30) comprend un convertisseur analogique-numérique et un traitement en nombre entier d'un signal de sortie numérique généré par le convertisseur analogique-numérique.

10. Module source de puissance (20) selon l'une quelconque des revendications 5 à 9, dans lequel
le circuit de mesure de température (30) et une commande de puissance (50) couplée au circuit de mesure de température (30) sont de conception **analogique.**

11. Module de source de puissance (20) selon l'une des revendications 5 à 10, dans lequel
l'interface (60) du module de source de puissance (20) comprend un **dispositif de décodage** (30, 64) pour décoder une **température de consigne** codée par l'interface (70) du module de vaporiseur (80).

12. Module de source de puissance (20) selon la revendication précédente, dans lequel
les contacts de signaux (62, 64) du module de source de puissance (20) sont disposés en correspondance avec des positions possibles prédéterminées des contacts de signaux (72, 74) du vaporisateur (80),
la **température de consigne** est codée par la **disposition des contacts de signaux** (72, 74) à l'interface (70) du vaporisateur (80),
le dispositif de décodage (30, 64) est conçu pour décoder la température de consigne à l'aide des contacts de signaux (62, 64) du module de source de puissance (20) qui sont contactés par les contacts de signaux (72, 74) du vaporisateur (80).

13. Module de source de puissance (20) selon l'une des revendications 5 à 12, dans lequel
deux ou plusieurs contacts de signaux (62, 64) du module de source de puissance (20) sont disposés sur un **cercle concentrique** à au moins un contact de puissance (66) du module de source de puissance (20).

14. **Cigarette électronique ou autre système électrique pour fumer ou pour vaporiser** (10) pour la vaporisation d'un liquide afin de produire un aérosol inhalable, avec
un **vaporisateur** (80) selon l'une des revendications 1 à 4 ;
un **module de source de puissance** (20) selon l'une des revendications 5 à 13.
